## Europäisches Patentamt
## European Patent Office
## Office européen des brevets

(19)

(11) Veröffentlichungsnummer: **0 168 795**
**A2**

(12) **EUROPÄISCHE PATENTANMELDUNG**

(21) Anmeldenummer: **85108780.9**

(22) Anmeldetag: **13.07.85**

(51) Int. Cl.⁴: **H 01 J 61/35, H 01 J 61/44**

(30) Priorität: **18.07.84 DE 8421519 U**

(43) Veröffentlichungstag der Anmeldung: **22.01.86**
**Patentblatt 86/4**

(84) Benannte Vertragsstaaten: **BE CH DE FR GB LI LU NL SE**

(71) Anmelder: **Wolff, Friedrich, Störklingasse 38, CH-4125 Riehen/Basel (CH)**

(72) Erfinder: **Wolff, Friedrich, Störklingasse 38, CH-4125 Riehen/Basel (CH)**

(74) Vertreter: **Knoblauch, Ulrich, Dr.-Ing., Kühhornshofweg 10, D-6000 Frankfurt am Main 1 (DE)**

(54) **Leuchtstofflampe für Bräunungszwecke.**

(57) Eine Leuchtstofflampe für Bräunungszwecke besitzt einen Innenreflektor (2) und eine UVA-Strahlung emittierende Leuchtstoffschicht (3). Die Leuchtstoffschicht besteht im wesentlichen aus Cerium-Strontium-Magnesiumaluminat. Der Reflektor (2) kann ein Aluminiumoxid-Reflektor sein. Diese Leuchtstofflampe gibt auch eine ausgeprägte Strahlung im sichtbaren Bereich ab.

## Leuchtstofflampe für Bräunungszwecke

Die Erfindung bezieht sich auf eine Leuchtstofflampe für Bräunungszwecke mit Innenreflektor und einer im wesentlichen UVA-Strahlung emittierenden Leuchtstoffschicht.

Bei Solarien erwartet der Benutzer, daß die verwendeten Leuchtstofflampen, also mit einer Leuchtstoffschicht versehene Hg-Niederdrucklampen, ein möglichst sonnenähnliches Licht abgeben, d.h. eine Globalstrahlung erzeugen, die den gesamten UV-Bereich und wenigstens einen Teil der sichtbaren Strahlung umfaßt. Solche Leuchtstofflampen mit Innenreflektor werden aber nicht angeboten. Denn durch den Reflektor wird die Leuchtstoffschicht verhältnismäßig stark erwärmt. Durch diese Temperaturerhöhung sinkt die Lebensdauer rasch ab.

Es ist nur eine einzige UV-Leuchtstofflampe mit Innenreflektor bekannt, deren Leuchtstoff auch bei höheren Temperaturen noch stabil ist. Bei diesem Leuchtstoff handelt es sich um Strontiumfluoroborat/Europium. Er emittiert aber fast ausschließlich in einem sehr schmalen Bereich, nämlich im langwelligen UVA-Bereich und nur ganz unwesentlich im Bereich des sichtbaren Spektrums.

- 2 -

Der Erfindung liegt die Aufgabe zugrunde, eine Leuchtstofflampe für Bräunungszwecke mit Innenreflektor anzugeben, die im gesamten UVA-Globalbereich emittiert und auch eine ausgeprägte Strahlung im sichtbaren Bereich aufweist.

Diese Aufgabe wird erfindungsgemäß dadurch gelöst, daß die Leuchtstoffschicht im wesentlichen aus Cerium-Strontium-Magnesiumaluminat besteht.

Überraschenderweise wurde festgestellt, daß dieser Leuchtstoff eine hohe Temperaturbeständigkeit hat und daher auch in Verbindung mit einer Leuchtstofflampe mit Innenreflektor stabil bleibt. Das Emissionsspektrum erstreckt sich über den gesamten UVA-Bereich bis weit in den Bereich des sichtbaren Lichts. Infolgedessen wird eine solche Leuchtstofflampe vom Benutzer im wesentlich stärkeren Maße als "sonnenähnlich" angesehen und gegenüber einer praktisch dunklen Leuchtstofflampe bevorzugt. Allerdings reicht das Spektrum auch noch bis in den langwelligen UVB-Bereich. Es besteht aber keine Schwierigkeit, einen eventuell störenden UVB-Anteil dadurch auszufiltern, daß der Glasmantel der Leuchtstofflampe eine diese Filterung bewirkende Zusammensetzung hat. Im übrigen ist ein kleiner Anteil der UVB-Strahlung nützlich, um Melamin-Vorstufen zu bilden, wodurch die Bräunung eingeleitet werden kann.

Vorzugsweise ist der Reflektor ein Aluminiumoxid-Reflektor. Dieser hat nicht nur gute Reflexionseigenschaften, sondern verträgt sich auch mit dem Leuchtstoff.

Die Erfindung wird nachstehend anhand eines bevorzugten Ausführungsbeispiels näher erläutert. Es zeigen:

Fig. 1 einen Querschnitt durch eine erfindungsgemäße Leuchtstofflampe und

Fig. 2 die Spektralverteilung der Strahlung einer solchen Leuchtstofflampe.

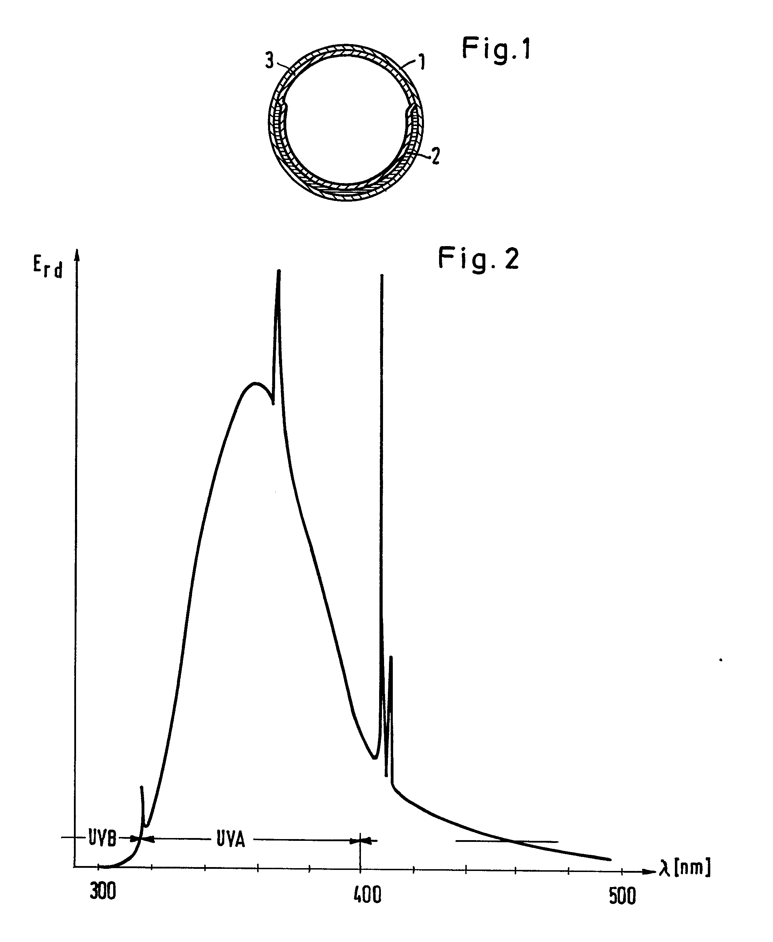

Die Leuchtstofflampe der Fig. 1 weist einen Glasmantel 1, einen sich über etwas mehr als 180° erstreckenden Innenreflektor 2 und eine Leuchtstoffschicht auf, die den Innenreflektor und den freibleibenden Teil des Glasmantels 1 überdeckt.

Der Leuchtstoff der Schicht 3 besteht aus Cerium-Strontium-Magnesiumaluminat. Der Innenreflektor 2 besteht aus Aluminiumoxid. Der Glasmantel 1 hat eine solche Zusammensetzung, daß er UVB-Strahlung und kurzwelligere Strahlung im wesentlichen abfiltert. Dies kann beispielsweise durch Zusatz von Eisen geschehen.

Fig. 2 zeigt über der Wellenlänge die relative Strahlungsenergie $E_{rel}$, also die Spektralverteilung der abgegebenen Strahlung. Man erkennt, daß im gesamten UVA-Bereich Strahlung abgegeben wird, daß UVB-Strahlung nur in vernachlässigbarem Maße vorhanden ist, daß aber auch in erheblichem Maße Strahlung im sichtbaren Bereich erzeugt wird.

- 1 -

Patentansprüche

1. Leuchtstofflampe für Bräunungszwecke mit Innenreflektor und einer im wesentlichen UVA-Strahlung
emittierenden Leuchtstoffschicht, dadurch gekennzeichnet, daß die Leuchtstoffschicht im wesentlichen
aus Cerium-Strontium-Magnesiumaluminat besteht.

2. Leuchtstofflampe nach Anspruch 1, dadurch gekennzeichnet, daß der Reflektor ein Aluminiumoxid-
Reflektor ist.

Fig.1

Fig.2